# EUROPÄISCHE PATENTANMELDUNG

(11) **EP 2 000 668 A1**
(43) Veröffentlichungstag der Anmeldung: **10.12.2008**
(21) Anmeldenummer: 07109699.4
(22) Anmeldetag: 06.06.2007
(51) Int. Cl.: F03D 11/02, F03D 11/04, F03D 9/00

(54) **Windkraftturm mit passiver Kühlvorrichtung**

(71) Anmelder: ICEC Holding AG, 6315 Morgarten (CH)
(72) Erfinder: Grob, Gustav R., 1227, Carouge (CH); Arbanas, Viktor, 5400 Baden (CH)
(74) Vertreter: OK pat AG

(57) **Zusammenfassung**

Windkraftanlage (10) mit einem vertikalen Turm (11), einem Rotor (30), der vom Wind (W) angetrieben wird und einer Gondel (20), die elektromechanische Elemente umfasst. Der Turm (11) weist innen einen Hohlraum (12) auf, der sich von einem unteren Bereich (11.1) des Turms (11) zu einem oberen Bereich (11.2) des Turms (11) erstreckt. Im unteren Bereich (11.1) des Turms (11) sind mindestens ein Lufteinlass (16) und im oberen Bereich (11.2) des Turms (11) ein Luftdurchlass vorgesehen. Die Gondel (20) hat einen Lufteintritt, der strömungstechnisch mit dem Luftdurchlass des Turms (11) verbunden ist. In der Gondel (20) ist eine Luftführung vorhanden ist, um Luft, die durch den Lufteintritt in die Gondel (20) strömt an mindestens einem der elektromechanischen Elemente vorbeizuführen. Im Bereich der Gondel (20) ist ein Gondelluftaustritt vorgesehen, wobei durch die Luftführung in der Gondel-(20) die Luft nach dem Vorbeiführen an dem mindestens einen elektromechanischen Element durch den Gondelluftaustritt austritt.

## Beschreibung

Gegenstand der Erfindung ist eine Vorrichtung zum passiven Kühlen der Elemente eines Windkraftturms nach dem Oberbegriff des Anspruchs **1.**

Windkraftanlagen weisen typischerweise einen turmartigen Unterbau auf, der eine Gondel mit den Windflügeln (Rotorblättern) und einem elektrischen Generator trägt. Der Generator wird angetrieben und erzeugt Strom, wenn Wind die Windflugel in Rotation versetzt. Entweder erfolgt eine Übertragung der Rotationsbewegung auf den Generator mittels eines geeigneten Getriebes, zum Beispiel eines Übersetzungsgetriebes, oder im Fall von getriebelos arbeitenden Windkraftanlagen durch den Einsatz eines entsprechenden Generators (highpole number generator), der speziell dazu ausgelegt ist bei geringen Umdrehungszahlen elektrischen Strom zu liefern. Im Bereich der Gondel sind häufig weitere Elemente, wie zum Beispiel elektrische Schaltungen, angeordnet, um die Anlage zu kontrollieren und/oder steuern.

Typischerweise erzeugen die Elemente der Windkraftanlagen Wärme und müssen gekühlt werden. Um die entsprechenden Elemente zu kühlen, werden häufig elektrische Ventilatoren eingesetzt, die einerseits Strom verbrauchen und andererseits Geräusche verursachen.

Die vorliegende Erfindung verfolgt nun das Ziel die Kühlung von Windkraftanlagen zu verbessern und die Kosten für Windkraftanlagen deutlich zu reduzieren. Ausserdem soll der Gesamtwirkungsgrad der Windkraftanlagen verbessert werden.

Weiterhin ist es eine Aufgabe der Erfindung ein Verfahren zur Kühlung von Windkraftanlagen bereit zu stellen.

Die **Lösung** dieser Aufgabe erfolgt für die Vorrichtung durch die Merkmale des kennzeichnenden Teils des Anspruchs **1.**

Die vorliegende Erfindung löst die Aufgabe dadurch, dass sie ein dediziertes Luftströmungssystem in einer Windkraftanlage einsetzt, das auf einem oder mehreren passiven physikalischen Effekten (z.B. dem Kamineffekt) beruht. Zu diesem Zweck wird der Turm einer Windkraftanlage so ausgelegt, dass sich in einem unteren Bereich des Turms ein Lufteinlass und in einem oberen Bereich des Turms ein Luftdurchlass befindet. Der Luftdurchlass ist so strömungstechnisch mit der Gondel verbunden, das Luft, die durch den Lufteinlass in den Turm strömt und durch den/die passiven physikalischen Effekte bedingt im Turm nach oben beschleunigt wird, durch den Luftdurchlass hindurch in die Gondel strömt. In der Gondel wird die Luft so geführt, dass sie mindestens an einem zu kühlenden Element der Windkraftanlage vorbei strömt, bevor die Luft dann durch einen weiteren Luftaustritt aus der Windkraftanlage austritt.

Besonders bevorzugt ist eine Ausführungsform, die den Kühleffekt mit einer Innenbeheizung der Windflügel kombiniert. Die Luft, die an den zu kühlenden Elementen vorbeiströmt, nimmt einen Teil der Wärme auf und erwärmt sich dadurch gegenüber der Umgebungsluft. Die erwärmte Luft wird nun im Bereich der Rotornabe in das Innere der Windflügel geführt, die innen hohl sind. Einerseits z.B. bedingt durch den Kamineffekt und andererseits unterstützt durch die Zentrifugalkraft, die auf die Luft einwirkt, die durch das Innere der Windflügel strömt, wird die Luft nach Aussen in Richtung der Spitzen der Windflügel bewegt. Im Bereich dieser Spitzen weisen die erfindungsgemässen Windflügel mindestens einen Luftaustritt auf. Durch diesen Luftaustritt hindurch verlässt die Luft endgültig die Windkraftanlage. Da die Luft etwas wärmer ist als die Umgebungsluft, können die Windflügel von Innen quasi passiv beheizt werden. Diese Art der Beheizung hat den Vorteil, dass sich kein Eis auf den Windflügeln bilden kann, das einerseits die Aerodynamik der Blätter und damit den Wirkungsgrad stört. Andererseits kann Eis, das sich von Windflügeln löst zu Personen- oder Sachschäden führen. Diese Art der Schäden können durch die Erfindung vermieden werden.

Weitere Vorteile ergeben sich unmittelbar aus der Beschreibung und den dazu gehörenden Zeichnungen.

Im Folgenden wird die Erfindung anhand von Ausführungsbeispielen und mit Bezug auf die Zeichnungen ausführlich beschrieben. Es zeigen:
- **Fig. 1**: eine erste erfindungsgemässe Vorrichtung in einer schematischen, seitlichen Schnittdarstellung;
- **Fig. 2A**: eine zweite erfindungsgemässe Vorrichtung in einer schematischen, seitlichen Schnittdarstellung;
- **Fig. 2B**: einen Teil der zweiten erfindungsgemässe Vorrichtung in einer schematischen, seitlichen Schnittdarstellung.

Konstruktive Elemente mit gleicher Funktion sind in allen Figuren mit gleichen Bezugszeichen versehen.

Im Folgenden wird die Bezeichnung Windkraftanlage (WKA) verwendet. Diese Bezeichnung soll auch Windkraftwerke oder Windenergiekonverter (WEK) einschliessen.

Die Erfindung beruht auf einem oder mehreren physikalischen Effekten. Einer dieser Effekte ist der sogenannte Kamineffekt. Der Kamineffekt ist eine physikalische Erscheinung, die z.B. durch eine Wärmequelle verursachte wird und eine nach oben gerichtete selbstverstärkende warme Luftströmung beschreibt. Der eigentliche Kamineffekt beruht somit auf einer Wärmeströmung. Durch die nach oben strömende Luft entsteht ein Unterdruck, der durch ein Nachströmen von Luft ausgeglichen wird. Der Begriff Kamineffekt wird aber im Rahmen der vorliegenden Beschreibung etwas breiter ausgelegt und wird auch verwendet für andere passive Sog- oder Strömungseffekte, die ein Aufwärtsströmen von Luft im Inneren eines Turms einer Windkraftanlage bewirken.

Im Rahmen der vorliegenden Erfindung kommen einer oder mehrere der folgenden Effekte zum Einsatz. Je nach Situation können sich diese Effekte gegenseitig verstärken:
- Temperaturdifferenz mit einer höheren Temperatur im unteren Bereich als im oberen Bereich des Turms;
- Druckdifferenz mit einem höheren Druck im unteren Bereich als im oberen Bereich des Turms;
- Saugwirkung, die durch die Zentrifugalkraft ausgelöst oder unterstützt wird, die auf Luft einwirkt, die das Innere der Windflügel durchströmt. Die Luft wird aufgrund der Zentrifugalkraft nach aussen zu den Spitzen der Windflügel hin bewegt. Es muss daher Luft von der Rotornabe her nachströmen. Diese Luft wird, bei entsprechendem Aufbau der Windkraftanlage durch das Innere des Turmes hindurch angezogen/angesaugt.

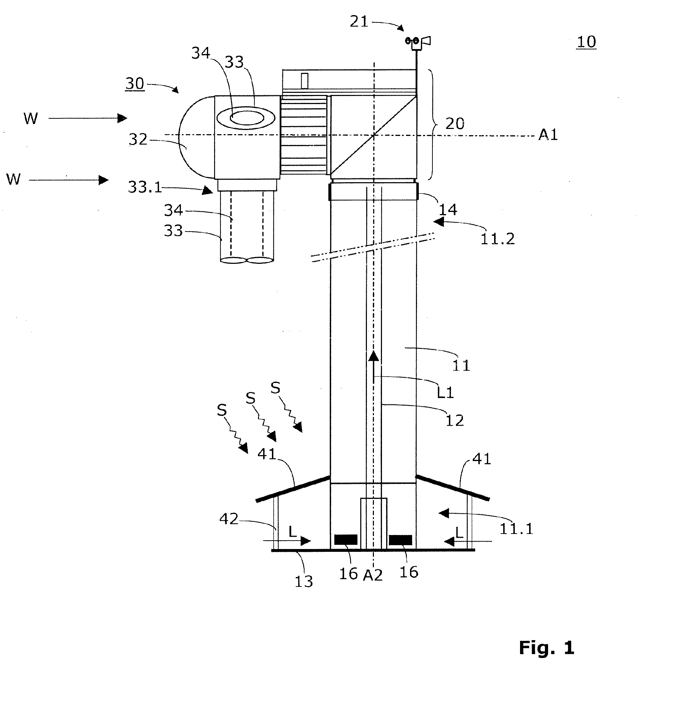

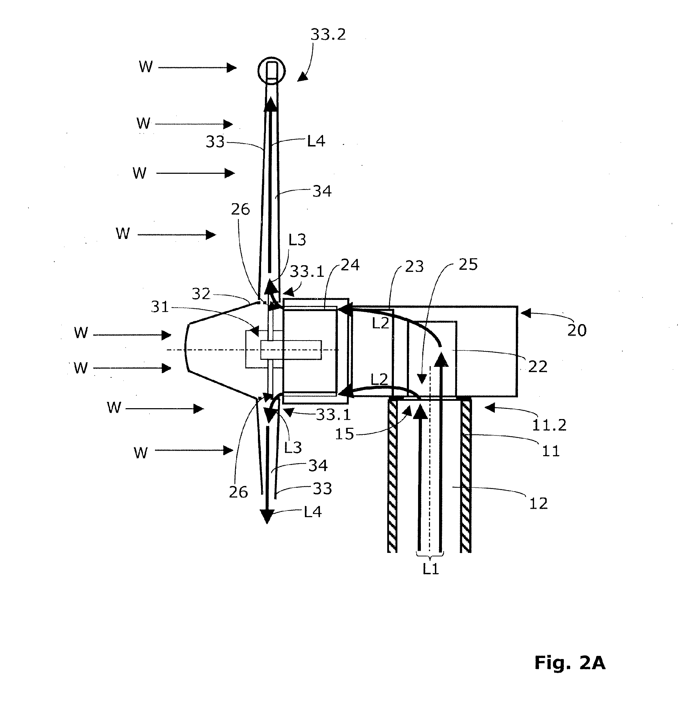

Details der Erfindung werden im Folgenden anhand einer ersten Ausführungsform beschrieben. In Fig. 1 werden schematische Details einer ersten Windkraftanlage 10 gezeigt. Gezeigt ist ein Turm 11, der eine Gondel 20 mit einem Rotor 30 trägt. Der Rotor 30 weist Windflügel 33 auf, die von Wind W angeströmt und in Rotation um eine Achse A1 versetzt werden. Die Windflügel 33 sind mechanisch mit einer Rotornabe 31 (siehe Fig. 2A) verbunden. Diese Rotornabe 31 steht mit einem Generator 24 (siehe Fig. 2A) in Wirkverbindung.

Der Generator 24 erzeugt Strom wenn sich der Rotor 30 dreht. Die Gondel 20 ist typischerweise an einem Punkt 14 so mit dem Turm 11 verbunden, das sich die Gondel 20 mit dem Rotor 30 um eine vertikale Achse A2 drehen kann.

Gemäss Erfindung ist der Turm 11 innen hohl. Im gezeigten Beispiel weist der Turm 11 im Inneren einen Hohlraum 12 auf, dessen Durchmesser in Fig. 1 relativ klein dargestellt ist. Im unteren Bereich 11.1 des Turms 11 befindet sich mindestens ein Lufteinlass 16 und im oberen Bereich 11.2 des Turms 11 mindestens ein Luftdurchlass 15 (siehe Fig. 2A). In Fig. 1 sind die Lufteinlässe 16 als Ausschnitte mit rechteckigem Querschnitt gezeigt. Die Lufteinlässe können selbstverständlich auch eine andere Form aufweisen oder anders angeordnet sein. Luft L, die durch den/die Lufteinlässe 16 strömt, wird im Innenraum 12 des Turms 11 nach oben beschleunigt (siehe Pfeil L1). Die Luftströmung im Inneren des Turms 11 ist mit L1 bezeichnet.

Im Bereich der Lufteinlässe können auch Ventilatoren vorhanden sein, die vorzugsweise im Inneren des Turms 11 sitzen. Diese Ventilatoren haben eine unterstützende Wirkung auf den Luftstrom L1, bzw. das Ansaugen der Luft L.

Folgende weitere Details sind in Fig. 1 zu erkennen. Mindestens ein Teil dieser Details ist optional. Im unteren Bereich 11.1 sind Heizmittel 41, 42 angedeutet, die dazu dienen können, um die Luft L zu erwärmen. Besonders geeignet ist zum Beispiel eine Art Sonnendach 41 das auf Pfosten 42 gelagert ist und den Turm 11 im unteren Bereich 11.1 kragen- oder manschettenartig umgibt. Sonnenlicht S, das durch das Sonnendach 41 einfällt, führt zu einer lokalen Erwärmung der Luft L. Da warme Luft aufsteigt, wird die Luft L in das Innere 12 des Turms 11 hineingezogen und dort nach oben befördert (siehe Pfeil L1).

An der Gondel 20 kann z.B. eine Wetterstation 21 befestigt sein. Weiterhin können die Windflügel 33 innen hohl sein. In den Figuren ist der Windflügelhohlraum mit 34 bezeichnet. In einer Ausführungsform der Erfindung wird die Luftströmung durch den Windflügelhohlraum 34 geführt, wie weiter unter beschrieben wird. Ein Teil des Rotors 30 kann mit einer Rotornase 32, schrieben wird. Ein Teil des Rotors 30 kann mit einer Rotornase 32, bzw. einer Abdeckung versehen sein.

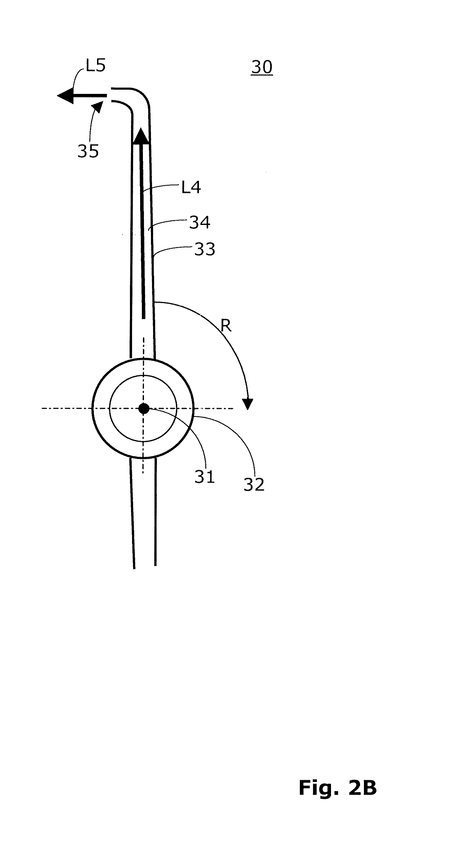

Weitere Aspekte der Erfindung sind nun im Zusammenhang mit einer zweiten Ausführungsform der Erfindung beschrieben. Diese Ausführungsform ist schematisch in den Figuren 2A und 2B gezeigt. In Fig. 2A ist der obere Teil einer Windkraftanlage 10 zu erkennen. Gezeigt sind einige wesentliche Elemente der Windkraftanlage 10. Wie bereits beschrieben, weist der Turm einen Hohlraum 12 auf, der sich vom unteren Bereich 11.1 des Turms 11 zum oberen Bereich 11.2 des Turms 11 erstreckt. Die Luftströmung L1 strömt durch den Hohlraum 12 aufwärts und tritt durch einen Luftdurchlass 15 des Turms 11 in das Innere der Gondel 20 ein. Zu diesem Zweck ist der besagte Luftdurchlass 15 mit einem Lufteintritt 25 strömungstechnisch verbunden.

In einer besonders einfachen Ausführungsform ist die Gondel 20 so auf dem Turm 11 gelagert, dass der Hohlraum 12 direkt in das Innere der Gondel 20 mündet. Im Inneren der Gondel 20 sind verschiedene elektromechanische Elemente angeordnet. So kann zum Beispiel ein Transformator 22, eine elektronische Steuerung 23 (z.B. in einem entsprechenden Schaltschrank) und ein Generator 24 in oder an der Gondel angeordnet sein. Die elektrischen Bauteile, z.B. die elektrische Verschaltung oder die elektronischen Komponenten der Steuerung 23 sind in Fig. 2A als Kasten 23 dargestellt. Der Generator 24 ist konzentrisch zur Rotornabe 31 angeordnet.

In der Gondel 20 ist eine Luftführung vorhanden, um Luft L2, die durch den Lufteintritt 25 in die Gondel 20 strömt, an mindestens einem der Elemente 22, 23, 24 vorbeizuführen. In Fig. 2A ist eine Ausführungsform gezeigt, bei der alle wärmeerzeugenden Elemente 22, 23 und 24 von der Luft L2 umströmt werden.

Die Luft L2 strömt dann, nachdem sie diese Elemente 22, 23, 24 passiert hat, durch einen Gondelluftaustritt 26 aus. In der gezeigten Ausführungsform, die besonders bevorzugt ist, sind die Windflügelhohlräume 34 strömungstechnisch so mit dem Gondelluftaustritt 26 verbunden, dass der Luftstrom (hier jetzt mit L3 bezeichnet) ins Innere der Windflügel 33 strömt. Die Luft bewegt sich jetzt durch die Windflügel 33 hindurch nach aussen (in Bezug auf die Achse A1, die mit der Achse der Rotornabe 31 zusammen fällt). Die Luftströmung im Inneren 34 der Rotoren ist mit L4 bezeichnet.

Wenn sich die Windflügel 33 um die Achse A1 drehen (diese Rotation ist in Fig. 2B mit R bezeichnet), so wird durch die Zentrifugalkraft die Luft von einem inneren Windflügelansatzpunkt 33.1 zu einem weiter aussen am Windflügel 33 befindlichen Punkt 33.2 beschleunigt. Beim weiter aussen am Windflügel 33 befindlichen Punkt 33.2 kann ein einfacher Strömungsauslass 35 vorgesehen sein, durch den die Luft L4 den Rotor 30 verlässt. In Fig. 2B ist eine spezielle Ausführungsform gezeigt, bei der ein düsenartiger, tangentialer Strömungsauslass 35 vorgesehen ist. Dieser Strömungsauslass 35 bildet eine Düse, die in eine Richtung zeigt, die der Rotationsrichtung R entgegengesetzt ist. Die austretende Luft L5 gibt dem Windflügel 33 an seinem äusseren Punkt 33.2 einen zusätzlichen Rückstoss. Dieser Rückstoss kann unter Umständen die Rotationsgeschwindigkeit des Rotors 30 erhöhen.

Bei einer Gesamthöhe des Turms 11, die im Bereich von 50 Metern und mehr liegt, ergibt sich zwischen dem unteren Bereich 11.1 und dem oberen Bereich 11.2 eine spürbare Druckdifferenz. Der Luftdruck in unteren Bereich ist höher als der Druck im oberen Bereich 11.2 Der entsprechende Druckgradient führt zu einer Sogwirkung im Inneren 12 des Turms 11. Wenn die Luft L2, nachdem sie die Elemente 22, 23, 24 gekühlt hat, in die Windflügel 33 geführt wird, die innen hohl sind, dann verstärkt die Zentrifugalkraft der rotierenden Windflügel 33 die Sogwirkung.

Die durch einen Druckgradienten bedingte Sogwirkung kann durch Temperaturunterschiede verstärkt werden. Vorzugsweise werden Heizmittel (z.B. die in Fig. 1 gezeigten Mittel 41, 42) zu diesem Zweck am unteren Ende 11.1 des Turms 11 angeordnet.

In einer weiteren bevorzugten Ausführungsform der Erfindung sind am Rotor des Generators 24 und/oder im Bereich der Nabe 32 Ventilatorenrippen oder - flügel angeordnet, welche den Luftstrom L4 zusätzlich beschleunigen.

Vorzugsweise befindet sich der Transformator 22 in der Gondel 20 in einem Bereich oberhalb des Turms 11, wobei die Anordnung so gewählt wird, dass der Luftstrom, der in die Gondel 20 eintritt, an dem Transformator 22 vorbei, oder durch den Transformator 22 hindurch strömt.

## Patentansprüche

1. Windkraftanlage (10) mit einem vertikalen Turm (11), einem Rotor (30), der vom Wind (W) angetrieben wird und einer Gondel (20), die elektromechanische Elemente (22, 23, 24) umfasst, **dadurch gekennzeichnet, dass**
- der Turm (11) innen einen Hohlraum (12) aufweist, der sich von einem unteren Bereich (11.1) des Turms (11) zu einem oberen Bereich (11.2) des Turms (11) erstreckt,
- im unteren Bereich (11.1) des Turms (11) ein Lufteinlass (16) und im oberen Bereich (11.2) des Turms (11) ein Luftdurchlass (15) vorgesehen sind,
- die Gondel (20) einen Lufteintritt (25) aufweist, der strömungstechnisch mit dem Luftdurchlass (15) des Turms (11) verbunden ist,
- in der Gondel (20) eine Luftführung vorhanden ist, um Luft (L2), die durch den Lufteintritt (25) in die Gondel (20) strömt an mindestens einem der Elemente (22, 23, 24) vorbeizuführen,
- im Bereich der Gondel (20) ein Gondelluftaustritt (26) vorgesehen ist, wobei durch die Luftführung in der Gondel (20) die Luft (L2) nach dem Vorbeiführen an dem mindestens einen Element (22, 23, 24) durch den Gondelluftaustritt (26) austritt.

2. Windkraftanlage (10) nach Anspruch 1, **dadurch gekennzeichnet, dass** im unteren Bereich (11.1) des Turms (11) Heizmittel (41, 42) oder Ventilatoren vorhanden sind, um Luft (L) im unteren Bereich (11.1) des Turms (11) zu erwärmen.

3. Windkraftanlage (10) nach Anspruch 2, **dadurch gekennzeichnet, dass** es sich bei den Heizmitteln (41, 42) um Mittel handelt, die Sonnenlicht (S) einfangen oder speichern.

4. Windkraftanlage (10) nach Anspruch 1 oder 2, **dadurch gekennzeichnet, dass**
der Gondelluftaustritt (26) sich im Bereich einer Rotornabe (31) befindet, mit der die Windflügel (33) mechanisch gekoppelt sind.

5. Windkraftanlage (10) nach Anspruch 4, **dadurch gekennzeichnet, dass** Windflügel (33) des Rotors (30) innen einen Windflügelhohlraum (34) aufweisen, der sich von einem inneren Windflügelansatzpunkt (33.1) zu einem weiter aussen am Windflügel (33) befindlichen Punkt (33.2) erstreckt.

6. Windkraftanlage (10) nach Anspruch 5, **dadurch gekennzeichnet, dass** der Windflügelhohlraum (34) im Bereich des Windflügelansatzpunkts (33.1) strömungstechnisch mit dem Gondelluftaustritt (26) verbunden ist, damit die Luft (L3), die durch den Gondelluftaustritt (26) austritt in den Windflügelhohlraum (34) strömt.

7. Windkraftanlage (10) nach Anspruch 7, **dadurch gekennzeichnet, dass** der Windflügelhohlraum (34) im Bereich des weiter aussen am Windflügel (33) befindlichen Punkts (33.2) in einem Strömungsauslass (35) mündet, durch den die Luft (L4) den Rotor (30) verlässt.

8. Windkraftanlage (10) nach Anspruch 1, **dadurch gekennzeichnet, dass** im Bereich des Generators (24) und/oder im Bereich einer Nabe (32) Ventilatorenrippen oder -flügel angeordnet sind, welche die Luft zusätzlich beschleunigen.
